# EUROPÄISCHE PATENTSCHRIFT

(11) **EP 1 337 315 B1**
(45) Veröffentlichungstag und Bekanntmachung des Hinweises auf die Patenterteilung: **29.09.2004**
(21) Anmeldenummer: 01984791.2
(22) Anmeldetag: 30.11.2001
(51) Int. Cl.: B01D 53/78, B01D 53/86, B01D 47/10, D21C 11/06

(54) **VERFAHREN ZUR REINIGUNG VON ABGAS AUS EINER ZELLSTOFFABRIK**
METHOD FOR THE TREATMENT OF WASTE GAS FROM A CELLULOSE PLANT
PROCEDE POUR EPURER DES GAZ D'ECHAPPEMENT PROVENANT D'UNE USINE DE CELLULOSE

(30) Priorität: 01.12.2000 DE 10060046; 05.03.2001 DE 10110464
(43) Veröffentlichungstag der Anmeldung: 27.08.2003
(73) Patentinhaber: Linde Aktiengesellschaft, 65189 Wiesbaden (DE)
(72) Erfinder: DIETRICH, Wolfgang, 06217 Merseburg (DE); HILLER, Hans, 82319 Starnberg (DE)
(74) Vertreter: Gellner, Bernd, Dr.
(86) Internationale Anmeldenummer: PCT/EP2001/014009
(87) Internationale Veröffentlichungsnummer: WO 2002/043838

(56) Entgegenhaltungen:
- DE-U- 1 967 738
- DE-U- 7 406 735
- US-A- 3 544 086
- US-A- 4 619 813
- US-A- 5 944 951
- SOVIET INVENTIONS ILLUSTRATED Week 8447, 9. Januar 1985 (1985-01-09) Derwent Publications Ltd., London, GB; AN 84-292832 XP002209583 & SU 1 031 473 A (LENINGRAD CELL-PAPER INS), 30. Juli 1983 (1983-07-30)
- R.M.G.BOUCHER: L'INDUSTIE CHIMIQUE, März 1952 (1952-03), Seiten 71-77, XP002209582
- DATABASE WPI Week 198722 Derwent Publications Ltd., London, GB; AN 1987-156108 XP002209584 & SU 1 263 736 A (LENINGRAD FORESTRY ACAD) , 15. Oktober 1986 (1986-10-15)

## Beschreibung

Die Erfindung betrifft ein Verfahren zur Reinigung von beim Zellstoffbleichen mit Ozon entstehendem Abgas.

Aufgrund der erhöhten Anforderungen des Umweltschutzes ist die Zellstoff- und Papierindustrie dazu übergegangen, anstelle von Chlor Ozon beziehungsweise ein Gasgemisch aus Sauerstoff und Ozon als Bleichmittel einzusetzen.

Hierbei wird Sauerstoff einem Ozongenerator zugeführt, in dem der Sauerstoff teilweise in Ozon umgesetzt wird. Das resultierende Sauerstoff-Ozon-Gemisch wird dann in der erforderlichen Menge und Konzentration der sogenannten Z-Stufe der Zellstofferzeugung zugeführt, in der der Zellstoff durch das Ozon gebleicht wird.

Bei der Reaktion des Zellstoffs mit dem Sauerstoff-Ozon-Gemisch entstehen Reaktionsgase, die gemeinsam mit dem Restozon aus der Z-Stufe abgeführt und über einen sogenannten Faserwäscher geleitet werden, in dem mitgerissene Zellstofffasem aus dem Gasstrom entfernt werden. Der Gasstrom wird dann einer Ozonvemichtungsanlage zugeführt, in der das Restozon in Sauerstoff umgewandelt wird.

Aus der US-A-5 944 951 ist ein Verfahren zum Bleichen von Zellstoff mittels Ozon bekannt. Das Abgas aus diesem Prozess wird durch einen Kohlenwasserstoff-Vemichter und einen Gastrockner geleitet und dann dem Ozongenerator wieder als gereinigtes Gas zugeführt.

Beim Betrieb derartiger Anlagen hat man festgestellt, dass an zahlreichen Anlagen- und Ausrüstungsteilen, die mit dem Abgas in Kontakt kommen, und an den Rohrleitungen zwischen der Z-Stufe und der Ozonvemichtungsanlage Korrosionen auftreten. Diese Korrosionen sind dann besonders stark, wenn der Zellstoff nicht nur mit Ozon, sondern mit Bleichmittelmischungen, beispielsweise Ozon und Chlordioxid, oder auch nacheinander mit unterschiedlichen Bleichmitteln behandelt wird. Bei Mischfahrweisen und bei allen Übergangszuständen zwischen definierten Fahrweisen der Bleichstufe hat man zusätzliche aggressive Substanzen in dem aus der Bleichstufe abgezogenen Gasstrom gefunden, die Korrosionen hervorrufen.

Aufgabe vorliegender Erfindung ist es daher, ein Verfahren der eingangs genannten Art zu entwickeln, wobei korrosive Schädigungen an den mit dem Abgas in Kontakt kommenden Anlagenteilen vermieden werden.

Diese Aufgabe wird durch ein Verfahren der eingangs genannten Art gelöst, wobei in dem Abgas befindliche Aerosole mittels eines Venturiwäschers mit Waschwasser aus dem Abgas ausgewaschen werden und gasförmige Verunreinigungen mittels einer Waschflüssigkeit aus dem Abgas ausgewaschen werden.

In umfangreichen, der Erfindung vorausgehenden Untersuchungen wurde festgestellt, dass bei der Reaktion von Zellstoff mit einem Bleichmittel, insbesondere mit Ozon, Reaktionsgase besonderer Art entstehen. Die Zusammensetzung dieser Reaktionsgase, die bei der Zellstoffproduktion bzw. -verarbeitung unter verschiedensten Verfahrensbedingungen anfallen und als Abgase abgeführt werden müssen, wurde eingehend analysiert.

Aufgrund dieser Untersuchungen wurde erkannt, dass sich im Bleichreaktor bei der Reaktion des Zellstoffs mit dem Bleichmittel Aerosole bilden, in denen verschiedene Säuren gebunden sind. Weitere aggressive Bestandteile wurden als gasförmige Spuren im Abgas festgestellt.

Diese Mischung unterschiedlichster Säuren und sonstiger aggressiver Stoffe wird ständig mit dem Abgas der Zellstoffproduktionsstrecke entzogen, greift dann die mit dem Abgas in Kontakt kommenden Anlagenteile an und führt zu korrosiven Schädigungen. Bei den bekannten Anlagen wurde bisher lediglich ein Faserwäscher zur Abgasreinigung eingesetzt. Dieser vermag zwar Zellstofffasem aus dem Abgas auszuwaschen, die aggressiven Substanzen verbleiben aber im Abgas, beziehungsweise können nur unzureichend aus diesem entfernt werden.

Die Erfindung stellt nun ein auf die in der Papier- und Zellstoffndustrie anfallenden Abgase abgestimmtes Reinigungsverfahren zur Verfügung, bei dem die mit Säuren beladenen Aerosole aus dem Abgas entfernt werden und die gasförmigen Verunreinigungen mittels einer Waschflüssigkeit aus dem Abgas ausgewaschen werden. Die Erfindung ist insbesondere bei der Herstellung von Zellstoff nach der HC-Technologie mit Ozon von großer Bedeutung.

Die Entfernung der Aerosole erfolgt mit einem Venturiwäscher. Das Aerosol beladene Abgas wird in den Venturiwäscher eingeleitet und mit einem Waschwasserstrom in Kontakt gebracht, der im Vergleich zum Abgasstrom eine hohe Relativgeschwindigkeit besitzt. Aufgrund ihrer Trägheit prallen die im Abgas befindlichen Aerosole auf die Waschwassertropfen, lagern sich an und werden so aus dem Abgas ausgewaschen.

Bevorzugt ist der Venturiwäscher mit verstellbarem Düsenquerschnitt ausgerüstet. Durch Änderung des Düsenquerschnitts kann bei konstanter Abgasmenge der Abscheidegrad, das heißt die Reinigungswirkung, verändert werden. Umgekehrt kann bei schwankenden Abgasmengen durch Anpassung des Düsenquerschnitts der Abscheidegrad konstant gehalten werden. Die Erfindung erlaubt so auch bei Laständerungen der Zellstoffproduktionsanlage stets eine konstante Reinigungswirkung.

Die gasförmigen Verunreinigungen im Abgasstrom werden bevorzugt in einer Waschkolonne ausgewaschen, in der das Abgas und eine Waschflüssigkeit im Gegenstrom geführt werden. Es hat sich gezeigt, dass sich eine Füllkörperkolonne zum Auswaschen von Chlor und Chlordioxid, die zur Bildung des die Korrosion verursachenden Chlorids beitragen, besonders gut eignet. Aber auch der Einsatz von Bodenkolonnen, gepackten Kolonnen oder Blasensäulen ist möglich.

Vorzugsweise erfolgt die Entfernung von Aerosolen aus dem Abgas stromaufwärts der Waschsäule. Zunächst wird also der Abgasstrom von den Aerosolen befreit und anschließend werden die gasförmigen Verunreinigungen in der Waschsäule ausgewaschen. Besonders bevorzugt werden in dem Abgas befindliche Festkörper, beispielsweise Zellstofffasern, vor der Entfernung der Aerosole aus dem Abgasstrom entfernt. Anderenfalls besteht die Gefahr, dass die Vorrichtung zur Entfernung der Aerosole und die Waschsäule zur Entfernung der gasförmigen Verunreinigungen durch Zellstofffasem und andere Partikel verlegt werden.

Von Vorteil wird die Waschflüssigkeit aus der Waschkolonne auch als Waschwasser für den Venturiwäscher verwendet. In diesem Fall wird ein Waschflüssigkeitskreislauf zwischen der Waschkolonne und dem Venturiwäscher installiert.

Da je nach Ausführung der Waschkolonne und Zusammensetzung des Abgases teilweise auch Ozon in der Waschflüssigkeit gelöst wird, wird die Waschflüssigkeit über einen Ozonvemichter, bevorzugt über einen katalytischen Ozonvemichter, geführt, bevor sie entsorgt wird.

Durch die Erfindung ist der Abgasstrom nach Durchlaufen des Venturiwäschers, beziehungsweise der Vorrichtung zur Entfernung der Aerosole, und der Waschsäule von chemisch aggressiven Stoffen befreit, so dass Korrosionen an den stromabwärts der Waschsäule gelegenen Anlagenteilen nicht mehr auftreten. Um Korrosionen in dem Abgasreinigungsteil, d.h. in der Waschsäule und der Vorrichtung zur Entfernung der Aerosole, zu verhindern, werden diese bevorzugt aus molybdänhaltigem, austenitischen Stahl oder einer Titanlegierung gefertigt ist. Diese Werkstoffe haben sich in Versuchen als ausreichend korrosionsbeständig, vor allem gegenüber Chloriden, erwiesen. Insbesondere die nach der Deutschen Industrienorm mit der Werkstoffnummer 1.4539 beziehungsweise 1.4529 bezeichneten Stähle und Titanlegierungen, insbesondere die Titanlegierung 3.7235 nach DIN 17851, haben sich besonders bewährt.

Das erfindungsgemäße Verfahren eignet sich zur Behandlung der beim Bleichen des Zellstoffs entstehenden Reaktionsgase und wird eingesetzt, wenn der Zellstoff mit Ozon und / oder Chlordioxid gebleicht wird. Insbesondere beim Bleichen mit zwei unterschiedlichen Bleichmitteln, wobei die Bleichmittel gleichzeitig oder auch nacheinander verwendet werden können, hat sich gezeigt, dass das Abgas mit besonders aggressiven Substanzen versetzt ist. Die Erfindung kann in diesen Fällen besonders vorteilhaft eingesetzt werden.

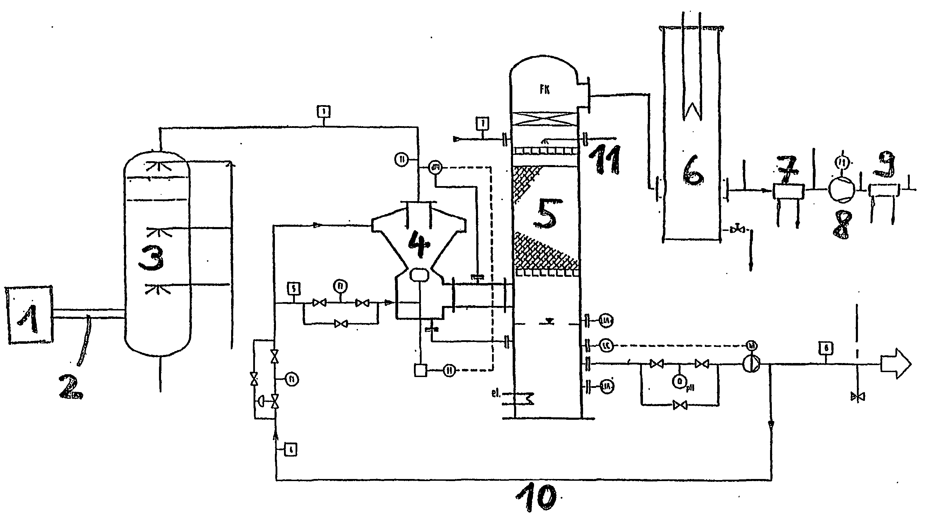

Die Erfindung sowie weitere Einzelheiten der Erfindung werden im Folgenden anhand von dem in der Zeichnung dargestellten Ausführungsbeispiel näher erläutert. Hierbei zeigt die einzige Figur das Verfahrensschema einer erfindungsgemäßen Anlage zur Reinigung von Abgas aus einem Bleichreaktor.

In einer Zellstoff- und Papierfabrik wird Zellstoff in einem Bleichreaktor 1 mit Ozon und Chlordioxid gebleicht. Bei den im Bleichreaktor 1 ablaufenden chemischen Reaktionen entstehen zahlreiche aggressive Substanzen. Die sich dabei bildenden Säuren sind vorrangig in Aerosolen gebunden, die ebenfalls im Bleichreaktor 1 entstehen. Weitere chemisch aggressive Stoffe, insbesondere molekulares Chlor und Chlordioxid, liegen in der Gasphase vor.

Die beim Bleichen entstehenden Abgase werden ständig über eine Abgasleitung 2 abgesaugt und einem Faserwäscher 3 zugeführt. In dem Faserwäscher 3 werden Zellstofffasern, die mit dem Abgasstrom mitgenommen wurden, durch entgegenströmendes Wasser ausgewaschen. Die in dem Abgas befindlichen Aerosole werden dagegen in dem Faserwäscher 3 nicht ausgewaschen, sondern gelangen mit dem Abgasstrom in die folgenden Anlagenteile.

Das von Zellstofffasem befreite Abgas wird anschließend in einen Venturiwäscher 4 eingeleitet, in dem die im Abgas enthaltenen Aerosole aus dem Abgas entfernt werden. Bei diesem Verfahrensschritt wird der Abgasstrom von aggressiven Säuren, wie HCl, H₂SO₄ und HNO₃, sowie weiteren Säuren, die sich in Aerosolen gebunden im Abgas befinden, befreit. Der Venturiwäscher 4 hat eine verstellbare Venturikehle, so dass unabhängig von der anfallenden Abgasmenge stets der gewünschte Abscheidegrad von Aerosolen aus dem Abgasstrom gewährleistet werden kann. Je nach Zellstoffdurchsatz durch die Zellstoffproduktionsanlage und damit je nach notwendigem Bleichmitteldurchsatz durch den Bleichreaktor 1 ist so stets eine optimale Abtrennung der Aerosole aus dem Abgasstrom einstellbar.

Danach wird der Abgasstrom einer Füllkörperkolonne 5 zugeführt, in der die gasförmigen Verunreinigungen im Gegenstrom mit Waschflüssigkeit ausgewaschen werden. Die notwendige Menge an Waschflüssigkeit wird am Kopf der Kolonne 5 über einen Flüssigkeits-Schwerkraft-Verteiler zugeführt, um das Mitreißen von Tropfen mit dem Gasstrom zu minimieren. Das beim Auswaschen in der Kolonne 5 anfallende Abwasser wird am Sumpf der Kolonne 5 abgezogen. Beim Auswaschen der gasförmigen Verunreinigungen wird meist auch ein Teil des Ozons in der Waschflüssigkeit gelöst. In einigen Staaten darf aus Umweltschutzgründen kein Ozon in die Atmosphäre entweichen. Aus diesem Grund wird die Waschflüssigkeit, bevor sie beispielsweise in die Kanalisation abgeführt wird, über einen in der Figur nicht gezeigten Ozonvemichter geleitet, um das in der Waschflüssigkeit gelöste Ozon zu vernichten.

Das in der Füllkörperkolonne 5 verwendete Waschwasser wird aus dem Sumpf der Kolonne 5 entnommen, zum Teil über Leitung 10 zum Venturiwäscher geführt und dort als Treibwasser beziehungsweise Waschwasser eingesetzt, um anschließend wieder in die Füllkörperkolonne 5 eingeleitet zu werden.

In der Waschkolonne 5 werden mindestens 97 % des im Abgas enthaltenen Chlors und Chlordioxids ausgewaschen. Auch die übrigen aggressiven Substanzen werden im wesentlichen vollständig aus dem Abgas entfernt, so dass das Abgas nach Durchlaufen des Venturiwäschers 4 und der Waschkolonne 5 gereinigt ist.

Das gewaschene Abgas, welches immer noch den Hauptanteil des von dem Bleichreaktor 1 kommenden Restozons, jedoch ansonsten keine chemisch aggressiven Stoffe mehr enthält, wird dann einem katalytischen Ozonvemichter 6 zugeführt, der das Restozon in Sauerstoff umwandelt.

Das aus dem katalytischen Ozonvemichter 6 kommende Gas wird über einen Kühler 7 einbem Unterdruckgebläse 8 zugeführt Das Unterdruckgebläse 8 regelt zum einen den Unterdruck im Bleichreaktor 1, zum anderen erzeugt es den Überdruck, der für das nachfolgende System benötigt wird. Nach dem Unterdruckgebläse 8 wird das Abgas nochmals über einen Kühler 9 gefahren und dann in einem in der Zeichnung nicht dargestellten Sauerstoffverdichter auf den für die folgenden Verfahrensschritte nötigen Enddruck verdichtet zu werden.

## Patentansprüche

1. Verfahren zur Reinigung von beim Zellstoffbleichen mit Ozon entstehendem Abgas, **dadurch gekennzeichnet, dass** in dem Abgas befindliche Aerosole mittels eines Venturiwäschers mit Waschwasser aus dem Abgas ausgewaschen werden und gasförmige Verunreinigungen mittels einer Waschflüssigkeit aus dem Abgas ausgewaschen werden (5).

2. Verfahren nach Anspruch 1, **dadurch gekennzeichnet, dass** der Düsenquerschnitt des Venturiwäschers (4) verstellbar ist und an die zu reinigende Abgasmenge und / oder den gewünschten Reinigungsgrad angepasst wird.

3. Verfahren nach Anspruch 1 oder 2, **dadurch gekennzeichnet, dass** die gasförmigen Verunreinigungen in einer Waschkolonne (5) ausgewaschen werden.

4. Verfahren nach einem der Ansprüche 1 bis 3, **dadurch gekennzeichnet, dass** die gasförmigen Verunreinigungen in einer Füllkörperkolonne (5) ausgewaschen werden.

5. Verfahren nach einem der Ansprüche 1 bis 4, **dadurch gekennzeichnet, dass** ein Teil der Waschflüssigkeit (10) als Waschwasser für den Venturiwäscher (4) verwendet wird.

6. Verfahren nach einem der Ansprüche 1 bis 5, **dadurch gekennzeichnet, dass** der Zellstoff mit Ozon und Chlordioxid gebleicht wird.

7. Verfahren nach Anspruch 6, **dadurch gekennzeichnet, dass** das in dem gereinigten Abgas befindliche Ozon vernichtet wird (6).

8. Verfahren nach Anspruch 7, **dadurch gekennzeichnet, dass** das Ozon katalytisch (6) vernichtet wird.

9. Verfahren nach einem der Ansprüche 1 bis 8, **dadurch gekennzeichnet, dass** in dem Abgas befindliche Zellstofffasem, vorzugsweise vor der Entfernung der Aerosole, aus dem Abgas entfernt werden.

10. Verfahren nach einem der Ansprüche 1 bis 9, **dadurch gekennzeichnet, dass** erst die in dem Abgas befindlichen Aerosole entfernt werden und dann die gasförmigen Verunreinigungen mittels einer Waschflüssigkeit aus dem Abgas ausgewaschen werden.

## Claims

1. Process for cleaning waste gas produced during the bleaching of chemical pulp with ozone, **characterized in that** the aerosols in the waste gas are washed out of the waste gas by means of a Venturi washer using washing water, and gaseous contaminants are washed out (5) of the waste gas by means of a washing liquid.

2. Process according to Claim 1, **characterized in that** the nozzle cross section of the Venturi washer (4) is adjustable and is matched to the quantity of waste gas to be cleaned and/or the desired level of cleanliness.

3. Process according to Claim 1 or 2, **characterized in that** the gaseous contaminants are washed out in a washing column (5).

4. Process according to one of Claims 1 to 3, **characterized in that** the gaseous contaminants are washed out in a packed column (5).

5. Process according to one of Claims 1 to 4, **characterized in that** some of the washing liquid (10) is used as washing water for the Venturi washer (4).

6. Process according to one of Claims 1 to 5, **characterized in that** the chemical pulp is bleached with ozone and chlorine dioxide.

7. Process according to Claim 6, **characterized in that** the ozone in the cleaned waste gas is destroyed (6).

8. Process according to Claim 7, **characterized in that** the ozone is destroyed catalytically (6).

9. Process according to one of Claims 1 to 8, **characterized in that** chemical pulp fibres in the waste gas are removed from the waste gas, preferably before the removal of the aerosols.

10. Process according to one of Claims 1 to 9, **characterized in that** the aerosols in the waste gas are removed first and then the gaseous contaminants are washed out from the waste gas by means of a washing liquid.

## Revendications

1. Procédé d'épuration de gaz d'effluent produit lors du blanchiment de cellulose à l'ozone, **caractérisé en ce que** les aérosols présents dans le gaz d'effluent sont séparés du gaz d'effluent par lavage à l'eau à l'aide d'un laveur à Venturi, les impuretés gazeuses étant séparées du gaz d'effluent par lavage (5) au moyen d'un liquide de lavage.

2. Procédé selon la revendication 1, **caractérisé en ce que** la section transversale de l'ajutage du laveur à Venturi (4) est ajustable et est adaptée à la quantité de gaz d'effluent à épurer et/ou au degré d'épuration souhaité.

3. Procédé selon les revendications 1 ou 2, **caractérisé en ce que** les impuretés gazeuses sont séparées par lavage dans une colonne de lavage (5).

4. Procédé selon l'une des revendications 1 à 3, **caractérisé en ce que** les impuretés gazeuses sont séparées par lavage dans une colonne (5) à garniture de remplissage.

5. Procédé selon l'une des revendications 1 à 4, **caractérisé en ce qu'**une partie du liquide de lavage (10) est utilisée comme eau de lavage pour le laveur à Venturi (4).

6. Procédé selon l'une des revendications 1 à 5, **caractérisé en ce que** la cellulose est blanchie à l'ozone et au dioxyde de chlore.

7. Procédé selon la revendication 6, **caractérisé en ce que** l'ozone présent dans le gaz d'effluent épuré est supprimé (6).

8. Procédé selon la revendication 7, **caractérisé en ce que** l'ozone est supprimé par voie catalytique (6).

9. Procédé selon l'une des revendications 1 à 8, **caractérisé en ce que** les fibres de cellulose présentes dans le gaz d'effluent sont séparées du gaz d'effluent de préférence avant la séparation des aérosols.

10. Procédé selon l'une des revendications 1 à 9, **caractérisé en ce que** l'on sépare d'abord les aérosols présents dans le gaz d'effluent, les impuretés gazeuses étant ensuite séparées du gaz d'effluent par lavage au moyen d'un liquide de lavage.
